# FASCICULE DE BREVET EUROPEEN

(11) **EP 2 086 751 B1**
(45) Date de publication et mention de la délivrance du brevet: **09.06.2010**
(21) Numéro de dépôt: 07823879.7
(22) Date de dépôt: 28.09.2007
(51) Int. Cl.: B32B 3/00, D06N 7/00, E04F 15/20

(54) **REVETEMENT DE SOL RESILIENT A HAUTE RESISTANCE A L'INDENTATION ET HAUTE PERFORMANCE ISOPHONIQUE ET PROCEDE DE FABRICATION**
ELASTISCHE BODENBESCHICHTUNG MIT HOHEM EINDRINGWIDERSTAND UND HOHER SCHALLDÄMMUNG SOWIE HERSTELLUNGSVERFAHREN DAFÜR
RESILIENT FLOOR COATING WITH INDENTATION HIGH RESISTANCE AND HIGH SOUND INSULATION PERFORMANCE AND METHOD FOR MAKING THE SAME

(30) Priorité: 31.10.2006 FR 0654644
(43) Date de publication de la demande: 12.08.2009
(73) Titulaire: GERFLOR, 69100 Villeurbanne (FR)
(72) Inventeur: FERLAY, Charles, F-69490 Pontcharra Sur Turdine (FR); JULIEN, Hervé, F-42110 Feurs (FR)
(74) Mandataire: Dupuis, François
(86) Numéro de dépôt international: PCT/FR2007/052045
(87) Numéro de publication internationale: WO 2008/053106

(56) Documents cités:
- EP-A- 1 607 544
- FR-A1- 2 367 887
- JP-A- 4 351 538

## Description

L'invention se rattache au secteur technique des revêtements de sols résilients utilisés dans le bâtiment. Plus particulièrement, ces revêtements trouvent une application dans le domaine hospitalier où les contraintes d'hygiène, de durabilité et de confort sont primordiales. On entend par confort, en particulier, le confort acoustique, tandis que les exigences de durabilité sont liées aux conditions de passage des personnes dans les locaux ainsi équipés mais aussi des moyens matériels utilisés dans ces lieux et qui sont susceptibles d'être déplacés par les opérateurs par roulement. Ce sont par exemple les lits. L'environnement normatif actuel impose des contraintes d'une part en terme de résistance à l'indentation donc à la capacité du revêtement à retrouver sa forme initiale après avoir subit un poinçonnement lourd (norme NF EN 433) et d'autre part en terme de confort acoustique apporté par le revêtement, mesurer par la norme (NF EN ISO 140.8). Ainsi, actuellement les spécifications sont les suivantes :
- Retour < à 0,2mm après 2 h 30 à la suite d'un poinçonnement de 2 h 30 sous 50 kg par cm2.
- Atténuation acoustique > à 13dbΔLW (EN ISO 717.2)

Dans le domaine hospitalier, la résistance au roulement provoqué par les lits médicalisés sur les revêtements de sols résilients est à prendre en considération. Aussi, le demandeur a développé une méthode d'évaluation certifiée par l'APAVE permettant de mesurer la force nécessaire pour déplacer un objet roulant sur les revêtements. Cette méthode a permis de développer des sols sur mousse ayant un compromis poinçonnement / acoustique conforme à la réglementation.

Il a également été identifié lors de ces recherches que les sollicitations réelles de poinçonnement subies par le revêtement sont de deux ordres différents et peuvent se résumer en deux méthodes d'évaluation :
- poinçonnement de 10 kg par cm2 pendant une heure (poinçonnement d'une chaise standard avec une personne de 100 kg dessus)
- poinçonnement de 20 kg par m2 pendant 5 H) (poinçonnement d'un lit médicalisé).

Ces tests permettent de différencier les revêtements et reflètent les phénomènes observés sur des chantiers.

Les revêtements proposés par le demandeur actuellement remplissent les conditions en termes de poinçonnement et de confort acoustique. Cependant, dans les couloirs hospitaliers à fort traffic, le personnel se plaint de revêtement de sols isophonique pour leur faible aptitude au roulement de charges lourdes.

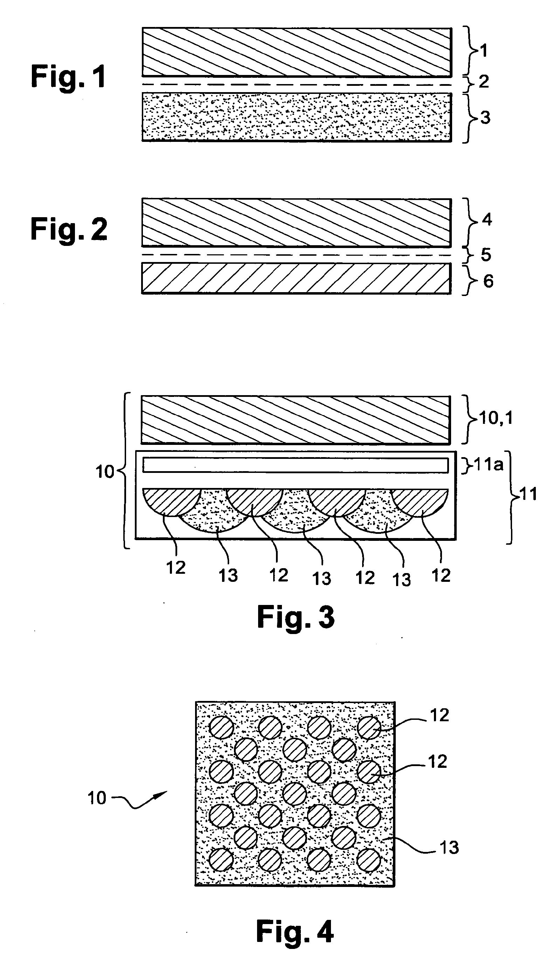

Ainsi, les produits actuels proposés par le demandeur sont regroupés en deux familles différentes et qui répondent chacune à des niveaux d'exigence différents ; et représentés aux figures 1 et 2.

### a) matériau sur mousse ou produit confort (NF EN 651).

Les produits ont la structure suivante représentée figure 1 avec une couche d'usure hétérogène, armée avec grille de verre ou non, et avec un traitement de surface (1), un support d'enduction armé (2) et une mousse très haute densité (3). Ces produits représentés figure 1 apportent le confort acoustique réglementaire, mais les performances en poinçonnement qui influent en partie sur la résistance au roulage les rendent moins attrayants pour les couloirs d'hôpitaux.

### b) les produits compacts (NF EN6 149) représentés figure 2.

Ces produits incluent une couche d'usure (4) avec traitement de surface, un renfort intercalaire sous forme d'une grille de verre (5) et à l'envers en polychlorure de vinyle. Ces produits n'apportent aucun confort acoustique mais ont un excellent comportement au poinçonnement.

La démarche du demandeur a été, en considérant l'ensemble de ces éléments de développer un nouveau concept de revêtement incluant une sous-couche pour sol résilient à haute résistance à l'indentation et autres performances isophoniques, et qui combine ainsi l'ensemble des avantages de l'art antérieur précité.

D'une manière originale, la solution apportée par le Demandeur a été de dissocier la partie résistance au poinçonnement et la partie apportant le confort acoustique pour agir indépendamment sur les deux paramètres.

Ainsi, selon l'invention et selon une première caractéristique, le revêtement est du type comprenant une couche d'usure hétérogène, armée ou non armée, qui est caractérisée en ce que la sous-couche comprend un support d'enduction souple sur lequel sont disposés une pluralité de plots rigides ou souples, lesdits plots étant associés à une mousse à faible densité et en ce que la mousse entourant lesdits plots est en débordement de ceux-ci, tout en laissant apparaître la partie supérieure desdits plots.

Ces caractéristiques et d'autres encore ressortiront bien de la suite de la description.

Pour fixer l'objet de l'invention illustré d'une manière non limitative aux figures des dessins où :
- les figure 1 et 2 sont des vues en coupe à caractère schématique des revêtements actuels proposés par le Demandeur dans le cas de revêtements disposés sur mousse et sur un envers compact.
- La figure 3 est une vue en coupe à caractère schématique du revêtement selon l'invention
- La figure 4 est une vue de dessous selon la figure 3.

Afin de rendre plus concret l'objet de l'invention, on le décrit maintenant d'une manière non limitative illustrée aux figures des dessins.

Le revêtement selon l'invention est référencé dans son ensemble par (10) et comprend une couche d'usure (10.1) hétérogène, armée ou non armée, qui est remarquable en ce qu'il reçoit une sous-couche (11) laquelle inclut un support d'enduction souple (11a) sur laquelle sont disposés des plots rigides ou souples (12) entre lesquels est intégré une mousse basse densité (13). Ces plots sont disposés d'une manière régulière ou irrégulière. Ils ont la configuration de demi-sphères et la mousse (13) de faible densité vient les recouvrir partiellement en laissant apparaître la partie supérieure d'extrémité. Ainsi, la sous-couche réalisée permet de répondre aux objectifs recherchés. Les plots offrent une meilleure résistance à la compression et à l'indentation tandis que la mousse assure l'amortissement aux bruits. Ces plots sont réalisés en matériau plastique et notamment en polychlorure de vinyle plastifié dont la dureté a été ajustée. Ces plots sont intégrés en continu directement lors de la fabrication du revêtement. Ils ont une hauteur de l'ordre de 0,6 à 1,2 mm et de préférence 0,9mm.

Les plots de part leur composition permettent un soutien de la structure de revêtement lors d'une sollicitation au poinçonnement. Leur comportement mécanique permet d'obtenir d'excellentes performances au test d'indentation, et les propriétés mécaniques permettent également de garantir la pérennité des performances.

L'association de la mousse basse densité, de par le relief obtenu, ainsi que ses qualités acoustiques propres permet d'obtenir une très bonne isolation acoustique. Quant à la résistance au roulement, la structure composite ainsi obtenue permet après test de valeur de se rapprocher des caractéristiques obtenues des matériaux compacts que l'on a représenté figure 2.

La solution apportée par le demandeur offre de grands avantages et permet de répondre aux objectifs recherchés, avec une optimisation de haute résistance à l'indentation et haute performance isophonique.

## Revendications

1. Revêtement de sol résilient à haute résistance a l'indentation et haute performance isophonique, du type comprenant une couche d'usure hétérogène (10), armée ou non armée, qui est **caractérisé en ce que** la sous-couche (11) comprend un support d'enduction souple (11a) sur lequel sont disposés une pluralité de plots (12), rigides ou souples, lesdits plots étant associés à une mousse (13) de basse densité et **en ce que** la mousse entourant lesdits plots est en débordement de ceux-ci, tout en laissant apparaître la partie supérieure desdits plots.

2. Revêtement selon la revendication 1 **caractérisé en ce que** les plots (12) sont en matière plastique et notamment en polychlorure de vinyle plastifié.

3. Revêtement selon l'une quelconque des revendications 1 et 2, **caractérisé en ce que** les plots ont une hauteur de l'ordre de 0,6mm à 1,2mm.

4. Procédé de fabrication de revêtement de sol selon l'une quelconque des revendications 1 à 3 **caractérisé en ce que** les plots sont intégrés en continu lors de la fabrication du revêtement.

## Claims

1. Resilient floor covering with high resistance to indentation and high isophonic performance, of the type that includes a heterogeneous wear layer (10), that may or may not be reinforced, which is **characterized in that** the sub-layer (11) includes a flexible coating carrier (11a) on which are placed a plurality of projections (12), that may be rigid or flexible, said projections being associated with a low-density foam (13) and **in that** the foam surrounding said projections extends over the edge thereof, while leaving the upper part of said projections exposed.

2. Covering as claimed in claim 1 **characterized in that** the projections (12) are made out of a plastic material and in particular out of plasticized polyvinyl chloride.

3. Covering as claimed in any one of claims 1 and 2, **characterized in that** the projections are between about 0.6 mm and 1.2°mm in height.

4. Method for the manufacture of a floor covering as claimed in any one of claims 1 to 3 **characterized in that** the projections are integrated continuously when the covering is manufactured.

## Patentansprüche

1. Schlagzäher Bodenbelag mit hoher Eindruckfestigkeit und hoher Schalldämmung nach Art der Beläge mit einer armierten oder unarmierten heterogenen Verschleißschicht (10), **dadurch gekennzeichnet, dass** die Unterschicht (11) ein flexibles Beschichtungsträgermaterial (11a) umfasst, auf dem mehrere starre oder flexible Klötze (12) angeordnet sind, die mit einem Schaumstoff (13) mit geringer Dichte kombiniert sind, und dass der die besagten Klötze umgebende Schaumstoff über diese hinausragt und dabei den oberen Teil der Klötze in Erscheinung treten lässt.

2. Belag nach Anspruch 1, **dadurch gekennzeichnet, dass** die Klötze (12) aus Kunststoff, insbesondere aus plastifiziertern Polyvinylchlorid, bestehen.

3. Belag nach Anspruch 1 oder 2, **dadurch gekennzeichnet, dass** die Klötze 0,6 mm - 1,2 mm hoch sind.

4. Verfahren zur Herstellung des Bodenbelags nach Anspruch 1, 2 oder 3, **dadurch gekennzeichnet, dass** die Klötze bei der Herstellung des Belags kontinuierlich eingearbeitet werden.
